# EUROPEAN PATENT APPLICATION

(11) **EP 4 850 996 A1**
(43) Date of publication of application: **09.12.2026**
(21) Application number: 25181061.0
(22) Date of filing: 05.06.2025
(51) Int. Cl.: B60T 17/08, F16D 65/28

(54) **SPRING BRAKE ACTUATOR AND VEHICLE**

(71) Applicant: ZF CV Systems Europe BV, 1170 Brüssel (BE)
(72) Inventor: FLISEK, Filip, 51-180 Wroclaw (PL)
(74) Representative: Rabe, Dirk-Heinrich

(57) **Abstract**

A spring brake actuator (10) for a vehicle (80) comprises a parking brake chamber (12), a parking brake piston (14) limiting the parking brake chamber (12), and a parking brake spring (16) configured to bias the parking brake piston (14) towards a parking braking position (18). The spring brake actuator (10) is configured such that a given pressure (20) in the parking brake chamber (12) biases the parking brake piston (14) away from the parking braking position (18). The spring brake actuator (10) comprises a service brake chamber (24) and a service brake piston (26) limiting the service brake chamber (24). The spring brake actuator (10) is configured such that a given pressure (28) in the service brake chamber (24) biases the service brake piston (26) towards a service braking position (30). The spring brake actuator (10) comprises a service brake spring (32) configured to bias the service brake piston (26) away from the service braking position (30). The spring brake actuator (10) comprises a first sealing element (36) limiting the service brake chamber (24). The first sealing element (36) is arranged between the parking brake piston (14) and the service brake piston (26).

## Description

The invention relates to a spring brake actuator for a vehicle and to a vehicle. The invention further relates to a method for manufacturing a spring brake actuator.

A spring brake actuator is a common device in commercial vehicles having pneumatic brake systems. A spring brake actuator typically combines service and parking/emergency braking functions. It typically comprises a parking brake spring for parking or emergency braking and a parking brake chamber, wherein a given pressure in the parking brake chamber counteracts the spring. The parking brake chamber is pressurized during normal operation. If the pressure is lost due to a failure or because the vehicle is parked and powered off, the spring is free to act to engage the brake. The spring brake actuator typically further comprises a service brake chamber for service braking, wherein a given air pressure in the service brake chamber activates a piston to apply the brake during normal driving. This dual-function design ensures reliable braking performance, providing a fail-safe mechanism that automatically applies the brakes in emergencies or when the vehicle is parked.

A common type of spring brake actuators comprises a two-part housing and the parking/emergency braking means are arranged in one part of the housing, while the service braking means are arranged in the other part of the housing. Such a design is disclosed, for example, in EP2944529A1.

In an attempt to suggest a more compact design, WO 2023/232877 A1 describes a combined service brake and spring brake cylinder with the service brake cylinder mounted inside the spring brake cylinder.

It is an object of the present invention, to suggest a compact spring brake actuator design that is yet simple to manufacture.

The object is achieved by a spring brake actuator according to claim 1.

A spring brake actuator achieving the object comprises a parking brake chamber. The spring brake actuator comprises a parking brake piston limiting the parking brake chamber. The spring brake actuator comprises a parking brake spring configured to bias the parking brake piston towards a parking braking position. The spring brake actuator is configured such that a given pressure in the parking brake chamber biases the parking brake piston away from the parking braking position. The spring brake actuator comprises a service brake chamber. The spring brake actuator comprises a service brake piston limiting the service brake chamber. The spring brake actuator is configured such that a given pressure in the service brake chamber biases the service brake piston towards a service braking position. The spring brake actuator comprises a service brake spring configured to bias the service brake piston away from the service braking position. The spring brake actuator comprises a first sealing element limiting the service brake chamber. The first sealing element is arranged between the parking brake piston and the service brake piston.

This design is particularly compact and yet simple to manufacture. During assembly, the parking brake piston and the service brake piston may first be assembled as one unit and may then be inserted into a housing of the spring brake actuator as the one unit. This makes assembly particularly simple.

According to an embodiment, the first sealing element is configured to guide the service brake piston relative to the parking brake piston. This further simplifies the assembly.

According to an embodiment, the spring brake actuator comprises a stop for the service brake piston, wherein the stop is fixed to or is part of the parking brake piston, wherein the service brake spring is configured to bias the service brake piston against the stop. This is a simple approach to keeping the service brake piston in place relative to the parking brake piston. The approach further facilitates inserting the parking brake piston and the service brake piston into a housing of the spring brake actuator as a unit.

The stop may preferably be fixed to the parking brake piston by a threaded connection or by a snap fit connection. These types of connections are particularly simple in assembly.

According to an embodiment, the stop is shaped as an inward protrusion. This embodiment is simple in regard of manufacturing the stop and simple in regard of assembly of the spring brake actuator.

The parking brake piston may preferably comprise a hollow cylindrical portion. The hollow cylindrical portion of the parking brake piston may preferably be an integral part of the parking brake piston.

According to an embodiment, the stop is fixed to the hollow cylindrical portion of the parking brake piston. This embodiment is simple in regard of assembly of the spring brake actuator.

According to an embodiment, the first sealing element is arranged between the service brake piston and the hollow cylindrical portion of the parking brake piston. This embodiment is simple in regard of assembly of the spring brake actuator.

According to an embodiment, the service brake piston is arranged essentially inside the hollow cylindrical portion of the parking brake piston. This embodiment provides for a compact spring brake actuator and is simple in regard of assembly of the spring brake actuator.

The spring brake actuator will typically comprise a housing. The housing may preferably be manufactured by deep drawing. This is simple and cost-effective. The housing may preferably comprise a stop for the parking brake piston, for example in the shape of a shoulder of the housing and/or in the shape of a step in a deep drawn structure of the housing.

The spring brake actuator may comprise a hollow cylindrical element that is fixed to the housing. The parking brake piston may comprise a hollow cylindrical portion. The hollow cylindrical element may preferably be configured to guide the hollow cylindrical portion of the parking brake piston relative to the housing. This allows for precise guidance of the piston relative to the housing while further simplifying assembly.

According to an embodiment, the spring brake actuator comprises a second sealing element, wherein the second sealing element is arranged between the hollow cylindrical element and the hollow cylindrical portion of the parking brake piston. This further simplifies assembly.

The hollow cylindrical element may preferably be fixed to the housing by at least one screw. This type of connection is particularly simple in assembly.

According to an embodiment, the service brake piston is arranged essentially inside the parking brake spring, at least when the service brake chamber is not pressurized. This embodiment provides for a particularly compact design of the spring brake actuator.

According to an embodiment, the service brake chamber is arranged essentially inside the parking brake spring and/or inside the hollow cylindrical portion of the parking brake piston, at least when the service brake chamber is pressurized. This embodiment provides for a particularly compact design of the spring brake actuator.

According to an embodiment, the service brake spring is arranged between the parking brake piston and the service brake piston. This embodiment provides for a particularly compact design of the spring brake actuator.

The spring brake actuator may comprise a third sealing element. The third sealing element may limit the parking brake chamber. The third sealing element may be arranged between the parking brake piston and the service brake piston. The third sealing element may be configured to guide the service brake piston relative to the parking brake piston.

The spring brake actuator may comprise a push rod configured to actuate a brake. The parking brake piston may be configured to actuate the push rod. The service brake piston may be configured to actuate the push rod. The service brake piston may be fixed to the push rod, preferably by a threaded connection. The parking brake piston may be movable relative to the push rod.

The spring brake actuator may comprise a flange. The flange may form a lid to a housing of the spring brake actuator. The flange may comprise a port for pressurizing and depressurizing the parking brake chamber. The flange may be fixed to the housing by screws or by a bayonet connection, for example.

The spring brake actuator may comprise a fourth sealing element. The fourth sealing element may be arranged between the flange and a push rod of the service brake actuator and/or may limit the parking brake chamber.

The object is also achieved by a vehicle according to claim 14.

A vehicle achieving the object comprises a brake. The vehicle comprises a spring brake actuator as described above. The spring brake actuator is configured to actuate the brake.

The vehicle can be, for example, a commercial vehicle, a truck, a passenger car or a bus. The vehicle can be, for example, a road vehicle or a rail vehicle. The vehicle can be, for example, a single vehicle, a tractor for a tractor-trailer combination, a trailer for a tractor-trailer combination or a tractor-trailer combination. The tractor-trailer combination can be, for example, a semi-trailer truck or a straight truck with trailer.

The invention further relates to a method for manufacturing a spring brake actuator as described above, the method comprising: assembling the parking brake piston and the service brake piston as one unit and inserting the parking brake piston and the service brake piston as one unit into a housing of the spring brake actuator.

The method may comprise fixing a flange, preferably forming a lid, to the housing.

Any ordinal numbers used herein merely simplify reference and are not to be construed as limiting with respect to the total number of elements for which the ordinal numbers are used or their order of arrangement. In particular, the existence of a second element does not necessarily mean that a first element exists.

If devices and methods are described herein, the methods described can advantageously be developed further by the embodiments and individual features of the devices, and vice versa.

The invention is described in more detail below with reference to examples, which are shown in schematic drawings.
Fig. 1 shows a spring brake actuator in a cross-sectional view.
Fig. 2 shows the spring brake actuator of Fig. 1 in another operating state.
Fig. 3 shows the spring brake actuator of Figs. 1 and 2 in yet another operating state.
Fig. 4 shows the spring brake actuator of Figs. 1 to 3 in a side view.
Fig. 5 shows an enlarged detail A of Fig. 1.
Fig. 6 shows a vehicle.

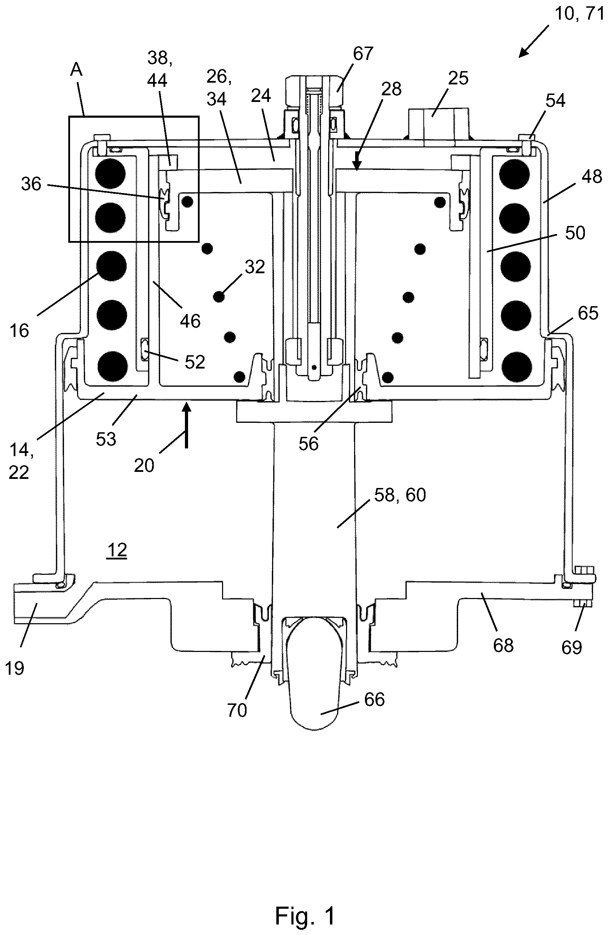

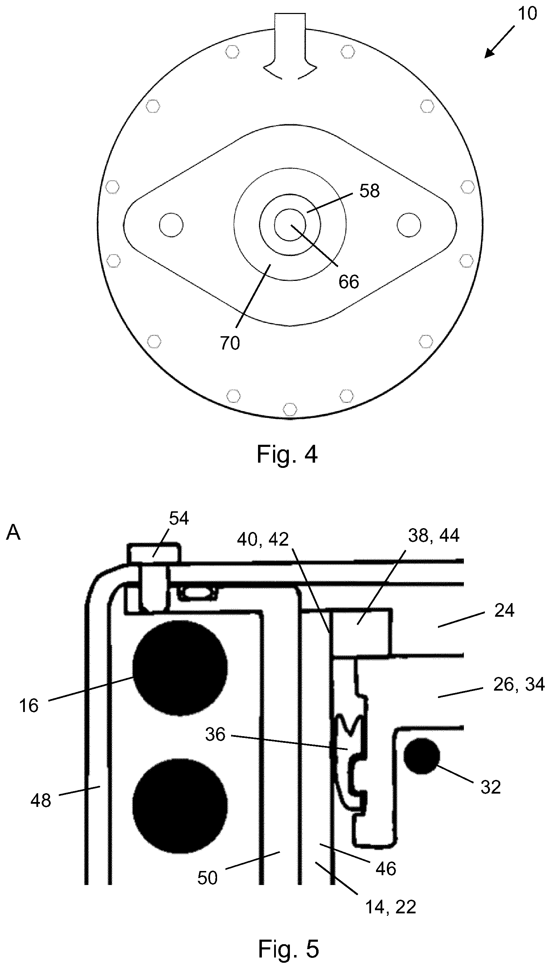

Figs. 1 to 5 will be described together, unless specific reference is made.

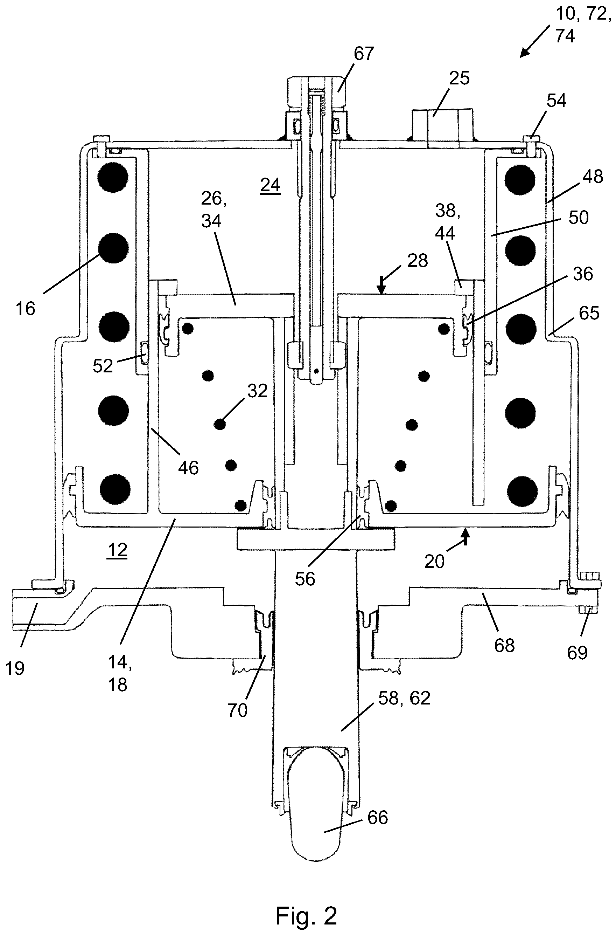

The spring brake actuator 10 of Figs. 1 to 5 comprises a parking brake chamber 12. The spring brake actuator 10 comprises a parking brake piston 14 limiting the parking brake chamber 12. The spring brake actuator 10 comprises a parking brake spring 16 configured to bias the parking brake piston 14 towards a parking braking position 18. In Fig. 2, the parking brake piston 14 is in the parking braking position 18.

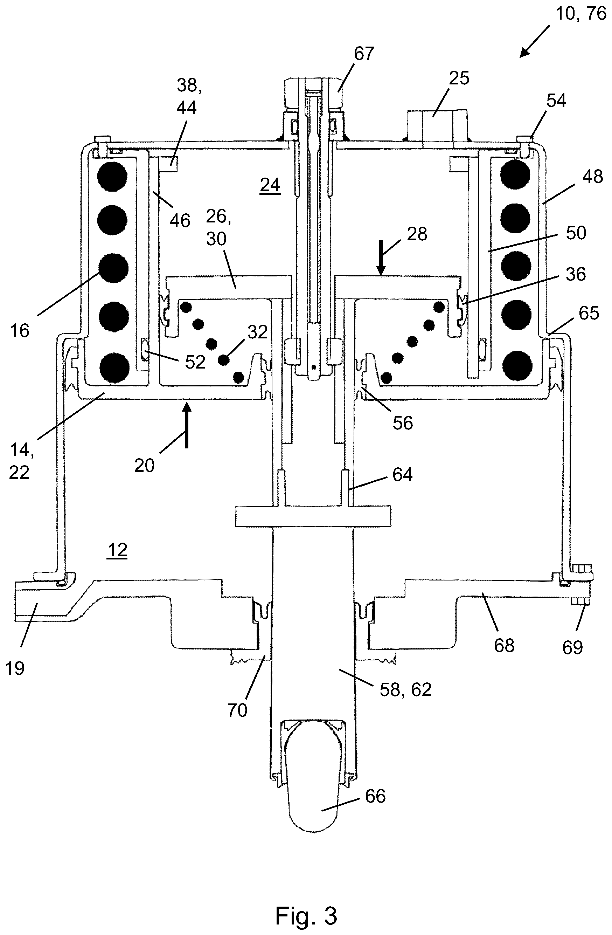

The spring brake actuator 10 of Figs. 1 to 5 comprises a port 19 for pressurizing or depressurizing the parking brake chamber 12. The spring brake actuator 10 is configured such that a given pressure 20 in the parking brake chamber 12 biases the parking brake piston 14 away from the parking braking position 18 and towards an inactive position 22. In Figs. 1 and 3, the parking brake piston 14 is in an inactive position 22.

The spring brake actuator 10 of Figs. 1 to 5 comprises a service brake chamber 24. The service brake chamber 24 can be pressurized or depressurized through a port 25. The spring brake actuator 10 comprises a service brake piston 26 limiting the service brake chamber 24. The spring brake actuator 10 is configured such that a given pressure 28 in the service brake chamber 24 biases the service brake piston 26 towards a service braking position 30. In Fig. 3, the service brake piston 26 is in the service braking position 30.

The spring brake actuator 10 of Figs. 1 to 5 comprises a service brake spring 32 configured to bias the service brake piston 26 away from the service braking position 30 and towards an inactive position 34. In Figs. 1 and 2, the service brake piston 26 is in an inactive position 34.

The spring brake actuator 10 of Figs. 1 to 5 comprises a first sealing element 36 limiting the service brake chamber 24. The first sealing element 36 is arranged between the parking brake piston 14 and the service brake piston 26. The first sealing element 36 is configured to guide the service brake piston 26 relative to the parking brake piston 14.

The spring brake actuator 10 of Figs. 1 to 5 comprises a stop 38 for the service brake piston 26. In this embodiment, the stop 38 is fixed to the parking brake piston 14. The stop 38 may instead be part of the parking brake piston 14 (not shown). The service brake spring 32 is configured to bias the service brake piston 26 against the stop 38. The stop 38 may be fixed to the parking brake piston 14 by a threaded connection 40 or by a snap fit connection 42. The stop 38 is shaped as an inward protrusion 44.

The parking brake piston 14 of the spring brake actuator 10 of Figs. 1 to 5 comprises a hollow cylindrical portion 46. The stop 38 is fixed to the hollow cylindrical portion 46 of the parking brake piston 14. The first sealing element 36 is arranged between the service brake piston 14 and the hollow cylindrical portion 46 of the parking brake piston 14.

The service brake piston 14 of the spring brake actuator 10 of Figs. 1 to 5 is arranged essentially inside the hollow cylindrical portion 46 of the parking brake piston 14, when the service brake chamber 24 is not pressurized, i.e. when the service brake piston 26 is in an inactive position 34, such as in Figs. 1 and 2. When in the service braking position 30 (see Fig. 3), the service brake piston 26 is still arranged essentially inside the hollow cylindrical portion 46 of the parking brake piston 14, but a part of the service brake piston protrudes out of hollow cylindrical portion 46 of the parking brake piston 14.

The spring brake actuator 10 of Figs. 1 to 5 comprises a housing 48. The housing 48 may preferably be manufactured by deep drawing.

The spring brake actuator 10 of Figs. 1 to 5 comprises a hollow cylindrical element 50. The hollow cylindrical element 50 is fixed to the housing 48. The hollow cylindrical element 50 is configured to guide the hollow cylindrical portion 46 of the parking brake piston 14 relative to the housing 48.

The spring brake actuator 10 of Figs. 1 to 5 comprises a second sealing element 52. The second sealing element 52 limits the service brake chamber 24. The second sealing element 52 is arranged between the hollow cylindrical element 50 and the hollow cylindrical portion 46 of the parking brake piston 14.

The hollow cylindrical portion 46 is depicted in Figs. 1 to 3 as being integrally formed with an element 53 (referenced in Fig. 1) of the parking brake piston 14 facing the parking brake chamber 12. In an alternative embodiment (not shown), the hollow cylindrical portion 46 may be a separate part and/or may be fixed to the element 53 facing the parking brake chamber 12, such as by a threaded connection, a press fit connection, at least one separate screw or a bayonet connection.

The hollow cylindrical element 50 of the spring brake actuator 10 of Figs. 1 to 5 is fixed to the housing 48 by a plurality of screws 54.

The service brake piston 26 of the spring brake actuator 10 of Figs. 1 to 5 is arranged essentially inside the parking brake spring 16. The service brake piston 26 is arranged completely inside the parking brake spring 16, when the service brake chamber 24 is not pressurized, i.e. when the service brake piston 26 is in an inactive position 34, such as in Figs. 1 and 2. When in the service braking position 30 (see Fig. 3), the service brake piston 26 is still arranged essentially inside the parking brake spring 16, but a part of the service brake piston 26 protrudes out of the service brake spring 16.

The service brake chamber 24 of the spring brake actuator 10 of Figs. 1 to 5 is arranged essentially inside the parking brake spring 16 and inside the hollow cylindrical portion 46 of the parking brake piston 14, at least when the service brake chamber 24 is pressurized.

The service brake spring 32 of the spring brake actuator 10 of Figs. 1 to 5 is arranged between the parking brake piston 14 and the service brake piston 26.

The spring brake actuator 10 of Figs. 1 to 5 comprises a third sealing element 56. The third sealing element 56 limits the parking brake chamber 12. The third sealing element 56 is arranged between the parking brake piston 12 and the service brake piston 26. The third sealing element 56 is configured to guide the service brake piston 26 relative to the parking brake piston 14. The spring brake actuator 10 comprises further sealing elements not referred to in more detail.

The spring brake actuator 10 of Figs. 1 to 5 comprises a push rod 58 configured to actuate a brake (not shown in Figs. 1 to 5). With respect to Figs. 1 to 3, actuation of the push rod 58 corresponds to a downward movement of the push rod 58. Fig. 1 shows the push rod 58 in a retracted position 60. The retracted position 60 corresponds to the brake being open. Figs. 2 and 3 show the push rod 58 in an extended position 62 corresponding to the brake being closed.

The parking brake piston 14 of the spring brake actuator 10 of Figs. 1 to 5 is configured to actuate the push rod 58, when the parking brake chamber 12 is not pressurized. The service brake piston 26 is configured to actuate the push rod 58, when the service brake chamber 24 is pressurized.

The service brake piston 26 of the spring brake actuator 10 of Figs. 1 to 5 is fixed to the push rod 58, in this example by a threaded connection 64 (referenced in Fig. 3). The parking brake piston 14 is movable relative to the push rod 58.

The housing 48 of the spring brake actuator 10 comprises a stop 65 for the parking brake piston 14 in the shape of a shoulder of the housing 48.

The spring brake actuator 10 of Figs. 1 to 5 comprises an angle compensation element 66 for compensating angular changes when actuating the brake.

The spring brake actuator 10 of Figs. 1 to 5 comprises a mechanical release mechanism 67 configured for manually retracting the push rod 58 in order to open the brake. In particular, the mechanical release mechanism 67 is configured to pull the service brake piston 26 and - via the stop 38 - also the parking brake piston 14 towards their inactive positions 22 and 34, respectively.

The spring brake actuator 10 of Figs. 1 to 5 comprises a flange 68. The flange 68 forms a lid to the housing 48. The flange 68 comprises the port 19 in this example. The flange 68 is fixed to the housing 48 by screws 69 in this example. Alternatively, the flange 68 may be fixed to the housing 48 by a bayonet connection (not shown), for example.

The spring brake actuator 10 of Figs. 1 to 5 comprises a fourth sealing element 70. The fourth sealing element 70 is arranged between the flange 68 and the push rod 58 and limits the parking brake chamber 12.

Fig. 1 shows the spring brake actuator 10 in a normal driving state 71. The parking brake chamber 12 is pressurized and the service brake chamber 24 is not pressurized. The push rod 58 is in a retracted position 60. The brake is open, as is desired during normal driving.

Fig. 2 shows the spring brake actuator 10 in a parking state 72 or an emergency state 74. The parking brake chamber 12 is not pressurized and, thus, the parking brake spring 16 forces the parking brake piston 14 into its parking braking position 18 and the push rod 58 into an extended position 60. The brake is closed, as is desired when parking or in a case of unintended pressure loss in the braking system.

Fig. 3 shows the spring brake actuator 10 in a service braking state 76. The parking brake chamber 12 is pressurized. The service brake chamber 24 is pressurized. The pressure 28 in the service brake chamber 24 forces the service brake piston 26 into its service braking position 30 and the push rod 58 into an extended position 62. The brake is closed, as is desired when the service brake, for example a brake padel, of the vehicle gets activated.

Assembly of the spring brake actuator 10 of Figs. 1 to 5 is fairly simple. Firstly, the hollow cylindrical element 50 may inserted into and fixed inside the housing 48, by screws 54 in this example. Afterwards, the parking brake spring 16 may be inserted into the housing 48. The parking brake piston 14, the service brake piston 26 and the push rod 58 may be assembled outside of the housing 48 and afterwards be inserted into the housing 48 as one unit. Afterwards, the flange 68 of the spring brake actuator 10 may be fixed to the housing 48.

With the spring brake actuator 10 of Figs. 1 to 5 it is also possible to exert a compound force onto the brake by pressurizing the service brake chamber 24 and actively depressurizing the parking brake chamber 12, i.e. a compound force from the pressure 28 in the service brake chamber 24 and the parking brake spring 16. This provides for a particularly strong braking force.

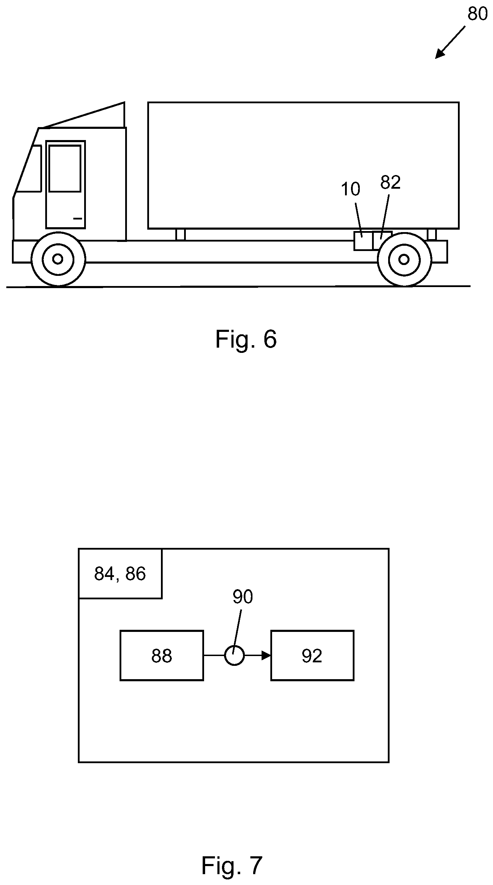

Fig. 6 shows a vehicle 80. The vehicle 80 comprises a brake 82. The vehicle 80 comprises a spring brake actuator 10, for example a spring brake actuator according to Figs. 1 to 5. The spring brake actuator 10 is configured to actuate the brake 82.

Fig. 7 shows a method 84 for manufacturing 86 a spring brake actuator, such as the spring brake actuator 10 according to Figs. 1 to 5. The method 84 comprises assembling 88 the parking brake piston and the service brake piston as one unit 90 and inserting 92 the parking brake piston and the service brake piston as one unit 90 into a housing of the spring brake actuator.

Where similar or identical elements are shown in different figures, reference numerals are assigned accordingly. Multiple descriptions of similar or identical elements have been avoided for the sake of clarity. Nevertheless, the embodiments of the figures can be combined with each other and developed further in accordance with the other embodiments and/or their individual features.

### List of references (part of the description)

- 10: spring brake actuator
- 12: parking brake chamber
- 14: parking brake piston
- 16: parking brake spring
- 18: parking braking position
- 19: port
- 20: pressure
- 22: inactive position
- 24: service brake chamber
- 25: port
- 26: parking brake piston
- 28: pressure
- 30: service braking position
- 32: service brake spring
- 34: inactive position
- 36: first sealing element
- 38: stop
- 40: threaded connection
- 42: snap fit connection
- 44: inward protrusion
- 46: hollow cylindrical portion
- 48: housing
- 50: hollow cylindrical element
- 52: second sealing element
- 53: element
- 54: screw
- 56: third sealing element
- 58: push rod
- 60: retracted position
- 62: extended position
- 64: threaded connection
- 66: angle compensation element
- 67: mechanical release mechanism
- 68: flange
- 69: screw
- 70: fourth sealing element
- 71: normal driving state
- 72: parking state
- 74: emergency state
- 76: service braking state
- 80: vehicle
- 82: brake
- 84: method
- 86: manufacturing
- 88: assembling
- 90: unit
- 92: inserting

## Claims

1. Spring brake actuator (10) for a vehicle (80),
wherein the spring brake actuator (10) comprises a parking brake chamber (12),
wherein the spring brake actuator (10) comprises a parking brake piston (14) limiting the parking brake chamber (12),
wherein the spring brake actuator (10) comprises a parking brake spring (16) configured to bias the parking brake piston (14) towards a parking braking position (18),
wherein the spring brake actuator (10) is configured such that a given pressure (20) in the parking brake chamber (12) biases the parking brake piston (14) away from the parking braking position (18),
wherein the spring brake actuator (10) comprises a service brake chamber (24),
wherein the spring brake actuator (10) comprises a service brake piston (26) limiting the service brake chamber (24),
wherein the spring brake actuator (10) is configured such that a given pressure (28) in the service brake chamber (24) biases the service brake piston (26) towards a service braking position (30),
wherein the spring brake actuator (10) comprises a service brake spring (32) configured to bias the service brake piston (26) away from the service braking position (30),
wherein the spring brake actuator (10) comprises a first sealing element (36) limiting the service brake chamber (24),
**characterized in that**
the first sealing element (36) is arranged between the parking brake piston (14) and the service brake piston (26).

2. Spring brake actuator (10) according to claim 1,
wherein the first sealing element (36) is configured to guide the service brake piston (26) relative to the parking brake piston (14).

3. Spring brake actuator according to one of the preceding claims,
wherein the spring brake actuator (10) comprises a stop (38) for the service brake piston (26),
wherein the stop (38) is fixed to or is part of the parking brake piston (14),
wherein the service brake spring (32) is configured to bias the service brake piston (26) against the stop (38).

4. Spring brake actuator (10) according to claim 3,
wherein the stop (38) is fixed to the parking brake piston (14) by a threaded connection (40) or by a snap fit connection (42).

5. Spring brake actuator (10) according to one of claims 3 to 4,
wherein the stop (38) is shaped as an inward protrusion (44).

6. Spring brake actuator (10) according to one of claims 3 to 5,
wherein the parking brake piston (14) comprises a hollow cylindrical portion (46),
wherein the stop (38) is fixed to the hollow cylindrical portion (46) of the parking brake piston (14).

7. Spring brake actuator (10) according to one of the preceding claims,
wherein the parking brake piston (14) comprises a hollow cylindrical portion (46),
wherein the first sealing element (36) is arranged between the service brake piston (26) and the hollow cylindrical portion (46) of the parking brake piston (14).

8. Spring brake actuator (10) according to one of claims 3 to,
wherein the parking brake piston (10) comprises a hollow cylindrical portion (46),
wherein the service brake piston (26) is arranged essentially inside the hollow cylindrical portion (46) of the parking brake piston (14), at least when the service brake chamber (24) is not pressurized.

9. Spring brake actuator (10) according to one of the preceding claims,
wherein the spring brake actuator (10) comprises a housing (48),
wherein the spring brake actuator (10) comprises a hollow cylindrical element (50),
wherein the hollow cylindrical element (50) is fixed to the housing (48),
wherein the parking brake piston (14) comprises a hollow cylindrical portion (46),
wherein the hollow cylindrical element (46) is configured to guide the hollow cylindrical portion (46) of the parking brake piston (14) relative to the housing (48).

10. Spring brake actuator (10) according to claim 9,
wherein the spring brake actuator (10) comprises a second sealing element (52),
wherein the second sealing element (52) is arranged between the hollow cylindrical element (50) and the hollow cylindrical portion (46) of the parking brake piston (14).

11. Spring brake actuator (10) according to one of claims 9 and 10,
wherein the hollow cylindrical element (50) is fixed to the housing (48) by at least one screw (54).

12. Spring brake actuator (10) according to one of the preceding claims,
wherein the service brake piston (26) is arranged essentially inside the parking brake spring (16), at least when the service brake chamber (24) is not pressurized.

13. Spring brake actuator (10) according to one of the preceding claims,
wherein the service brake spring (32) is arranged between the parking brake piston (14) and the service brake piston (26).

14. Vehicle (80),
wherein the vehicle (80) comprises a brake (82),
wherein the vehicle (80) comprises a spring brake actuator (10) according to one of the preceding claims,
wherein the spring brake actuator (10) is configured to actuate the brake (82).

15. Method (84) for manufacturing (86) a spring brake actuator (10) according to one of claims 1 to 13, the method comprising:
assembling (88) the parking brake piston (14) and the service brake piston (26) as one unit (90);
inserting (92) the parking brake piston (14) and the service brake piston (92) as one unit (90) into a housing (48) of the spring brake actuator (10).
